# EUROPEAN PATENT APPLICATION

(11) **EP 4 030 790 A1**
(43) Date of publication of application: **20.07.2022**
(21) Application number: 21188562.9
(22) Date of filing: 29.07.2021
(51) Int. Cl.: H04W 4/02, H04W 4/70, H04L 41/22, H04L 41/12

(54) **METHOD AND APPARATUS FOR GENERATING SEMANTIC MAP, AND READABLE STORAGE MEDIUM**

(30) Priority: 15.01.2021 CN 202110057916
(71) Applicant: Beijing Xiaomi Mobile Software Co., Ltd., Beijing 100085 (CN)
(72) Inventor: QU, Jinping, Beijing, 100085 (CN); ZHOU, Juejia, Beijing, 100085 (CN); FAN, Dian, Beijing, 100085 (CN)
(74) Representative: dompatent von Kreisler Selting Werner - Partnerschaft von Patent- und Rechtsanwälten mbB

(57) **Abstract**

A method for generating a semantic map includes: acquiring an initial map; determining, based on the initial map, a target space, wherein the target space includes one or more sub-regions; determining, based on the target space, a location of one or more first devices; determining, based on the location of the first devices, a location of one or more second devices; generating the semantic map, wherein the semantic map includes at least the target space, as well as the location of the first devices and the location of the second devices in the target space.

## Description

### BACKGROUND

At present, with the development of smart homes, more and more smart IoT (Internet of Things) devices are entering residences or offices of users. For example, devices such as smart TVs, smart speakers, smart lamps, sweeping robots, etc., can be controlled by instructions from the user, and can also operate according to preset logic.

### SUMMARY

The present disclosure relates generally to the field of smart homes, and more specifically to a method and apparatus for generating a semantic map, and a non-transitory computer-readable storage medium.

According to a first aspect of the present disclosure, there is provided a method for generating a semantic map, the method including: acquiring an initial map; determining, based on the initial map, a target space, wherein the target space includes one or more sub-regions; determining, based on the target space, a location of one or more first devices; determining, based on the location of the first devices, a location of one or more second devices and generating the semantic map, wherein the semantic map includes at least the target space, as well as the location of the first devices and the location of the second devices in the target space.

According to a second aspect of the present disclosure, there is provided an apparatus for generating a semantic map, including: an acquiring module (210) configured to acquire an initial map; a map determining module (220) configured to determine, based on the initial map, a target space, wherein the target space includes one or more sub-regions; a location determining module (230) configured to determine, based on the target space, a location of one or more first devices, and to determine, based on the location of the first devices, a location of one or more second devices; and a generating module (240) configured to generate the semantic map, wherein the semantic map includes at least the target space, the location of the first devices and the location of the second devices in the target space.

According to a third aspect of the present disclosure, there is provided a non-transitory computer-readable storage medium, when the instructions in the storage medium are executed by a processor of a mobile terminal, the mobile terminal will execute the method for generating a semantic map according to the first aspect of the present disclosure or according to any implementation modes of the first aspect thereof.

It is to be understood that both the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of this description, illustrate embodiments consistent with the present disclosure and, together with the description, serve to explain the principles of the present disclosure.
FIG. 1 is a schematic diagram showing a flow of generating a semantic map according to some embodiments.
FIG. 2 is a schematic diagram showing another flow of generating a semantic map according to some embodiments.
FIG. 3 is a schematic diagram showing another flow of generating a semantic map according to some embodiments.
FIG. 4 is a schematic diagram showing an initial map according to some embodiments.
FIG. 5 is a schematic diagram showing a target space according to some embodiments.
FIG. 6 is a schematic diagram showing the location of devices in a target space according to some embodiments.
FIG. 7 is a schematic diagram showing a way of confirming the location of a device in a target space according to some embodiments.
FIG. 8 is a schematic diagram showing another way of confirming the location of a device in a target space according to some embodiments.
FIG. 9 is a schematic diagram showing yet another way of confirming the location of a device in a target space according to some embodiments.
FIG. 10 is a schematic block diagram showing an apparatus for generating a semantic map according to some embodiments.
FIG. 11 is a schematic block diagram showing another apparatus for generating a semantic map according to some embodiments.
FIG. 12 is a block diagram showing an apparatus for generating a semantic map according to some embodiments.
FIG. 13 is a block diagram showing another apparatus for generating a semantic map according to some embodiments.

### DETAILED DESCRIPTION

Description will now be made in detail to embodiments, examples of which are illustrated in the accompanying drawings. The following description refers to the accompanying drawings in which the same numbers in different drawings represent the same or similar elements unless otherwise indicated. The implementations in the following description of exemplary embodiments do not represent all implementations consistent with the present disclosure. Instead, they are merely examples of devices and methods consistent with some aspects of the present disclosure as detailed in the appended claims.

At present, in some related technologies, the management over IoT devices by the user is carried out in the form of lists. All IoT devices display the device types through text, in the form of a list. It can be very inconvenient for the user to manage and manipulate in this way.

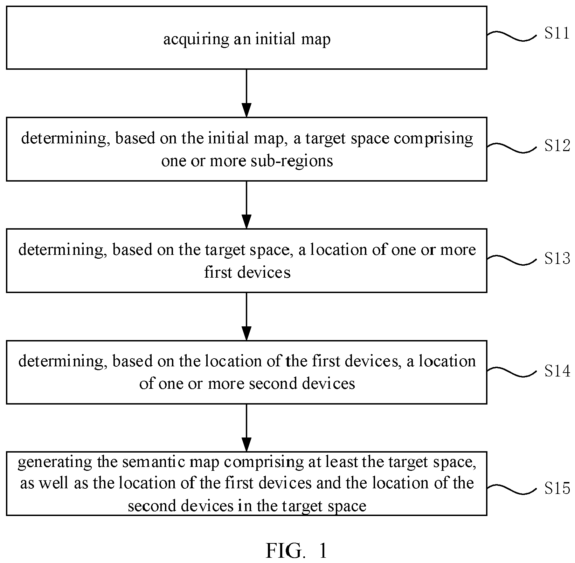

In order to solve the above technical problems, various embodiments of the present disclosure provide a method for generating a semantic map. In the semantic map, devices in the target space can be displayed intuitively, which facilitates subsequent management by the user. Since devices can mutually determine their respective location relationships, it is possible to control devices based on location. The method for generating a semantic map of the present disclosure may be applied to cloud servers to achieve better computing effects through high performance of cloud servers; it may also be applied to local devices, such as mobile phones, and computing through local devices can better protect privacy and reduce leakage of information about the target space and related devices. As shown in FIG. 1, the method for generating a semantic map provided by the present disclosure includes steps S11 to S15, which will be described in detail below.

In step S11, an initial map is acquired.

In some embodiments of the present disclosure, the initial map may be a map with certain features of the target space, for example, it may be a floor plan of a house, or a picture formed in other ways that can reflect a division of the target space. The target space may be a residence, an office space, or an indoor or outdoor place with a certain range. The initial map may be acquired by receiving the initial map sent by other devices, or the initial map may be generated by a server or a mobile phone.

In step S12, a target space is determined based on the initial map, wherein the target space includes one or more sub-regions.

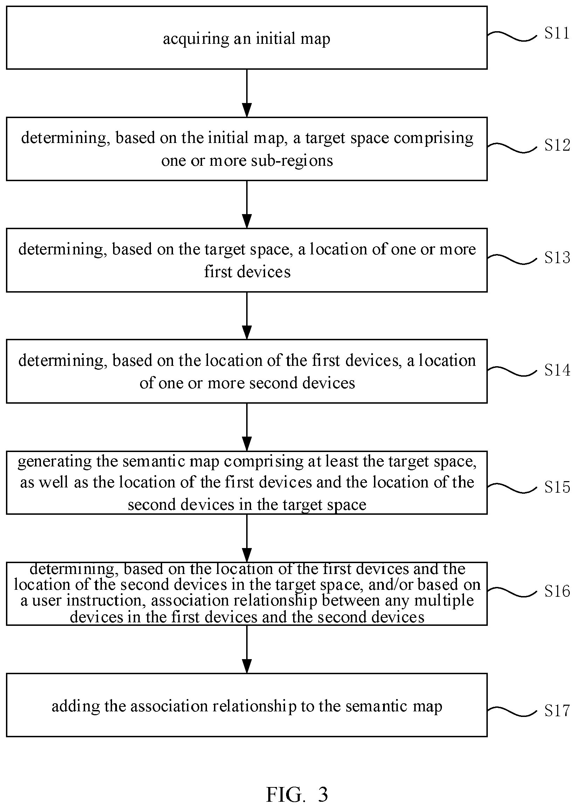

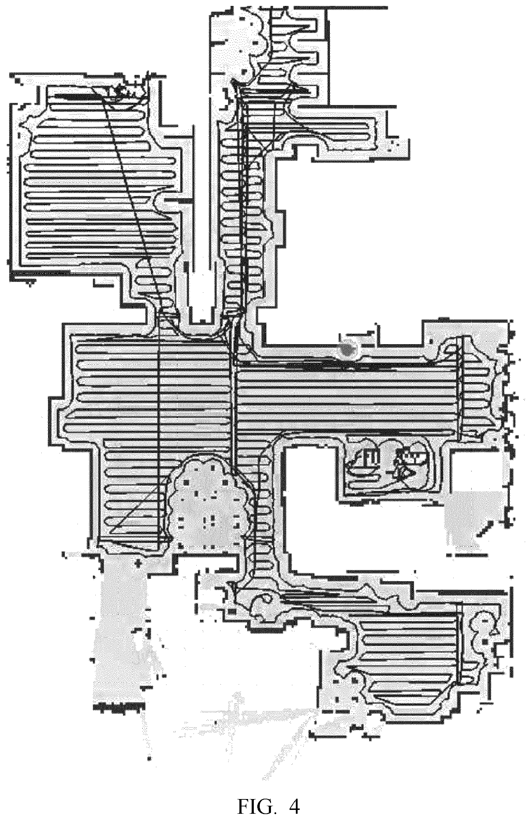

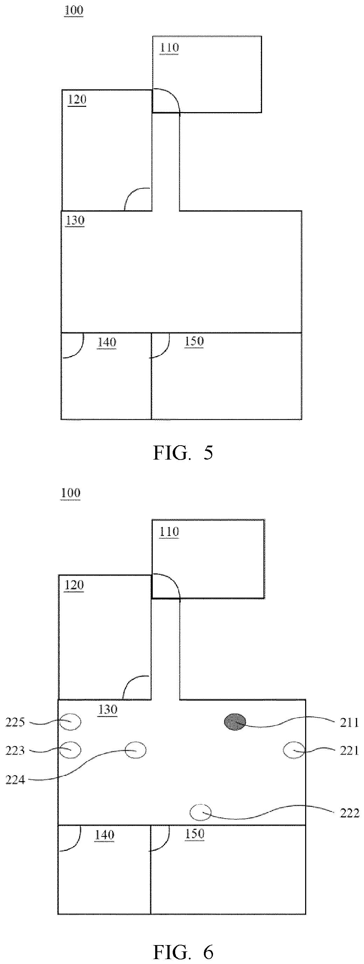

In some embodiments of the present disclosure, the target space is determined through the features provided by the initial map, and the target space image as shown in FIG. 3 can be generated. The sub-region may be a certain independent regional space in the target space. Respective sub-regions may be separated by physical or non-physical partitions such as walls, doors, windows, etc., which are used to distinguish each sub-region. In this way, by separating multiple independent sub-regions, the locations and association relationships between devices in the same sub-region or different sub-regions can be determined conveniently and assigned with semantics, such that subsequent location of devices may be more accurately determined. For example, the target space may be the entire dwelling house, and the sub-regions may be respective individual rooms, such as a living room, a bedroom, etc. For example, the target space may also be an office area, and the sub-regions may be office rooms, conference rooms, and so on. For example, through the initial map shown in FIG. 4 generated by the sweeping robot, the target space 100 shown in FIG. 5 can be generated. Referring to FIG. 5, the target space 100 may include multiple sub-regions 110, 120, 130, 140, 150. According to the initial map, the relationship between the sub-regions 110, 120, 130, 140, and 150 is determined, such as where the boundaries and connections are. After determining the target space, the user may also manually adjust it to determine accuracy of the target space and avoid errors caused by the initial map.

In step S13, a location of one or more first devices is determined based on the target space.

In some embodiments of the present disclosure, the location of the first device may be a relatively accurate location of the first device in the target space, or may be a rough location. In some embodiments, it is only determined in step S13 that the first device is located in one of the sub-regions of the target space.

In some embodiments of the present disclosure, the first device may be a device that has a positioning function itself, or a device that does not have a positioning function itself but can perform positioning through data interaction. In some scenarios, it may also be called a beacon device or an anchor device. The location of the first device is the basis for the positioning of other devices, and the location of other devices is determined based on the location of the first device. Therefore, in some embodiments, the first device may be a device with a relatively fixed location, such as a TV, so as to prevent the location of the first device being changed, which may lead to inaccurate location confirmation of other devices. In some embodiments of the present disclosure, the first device may be a television with a UWB (Ultra-Wide Band) module, which is relatively fixed in location and can be positioned through the UWB module. The positioning mode is not limited to the UWB mode, and may also be used for distance measurement or positioning through millimeter wave, ultrasonic, radar, Wi-Fi, Bluetooth, laser, infrared, etc. Corresponding to the positioning mode, the device may also be a device with any one or more of the following modules: a millimeter wave module, an ultrasonic module, a radar module, a Wi-Fi module, a Bluetooth module, a laser module, an infrared module.

In step S14, a location of one or more second devices is determined based on the location of the first devices.

In some embodiments of the present disclosure, the location of the second device can be a relatively accurate location in the target space, or can be a relative location with respect to the first device. In some embodiments, after the location of the first device is determined, a coordinate system can be established according to the location of the first device, and the location of the second device can be expressed by the coordinates of the coordinate system.

The second device has a positioning function, which may be implemented by any one or more of the following modules: a millimeter wave module, an ultrasonic module, a radar module, a Wi-Fi module, a Bluetooth module, a laser module, an infrared module.

In some embodiments of the present disclosure, after the location of the first device is determined, the location of the second device may be determined according to the location of the first device. The second device may be an IoT device in the target space, such as a smart speaker, a smart lamp, etc. In some embodiments of the present application, the location of the second device may be determined based on the location determined by the first device based on the location relationship between the second device and the first device.

The location in the present disclosure may be based on any point in the target space as the origin to establish a plane rectangular coordinate system, and the location is expressed through coordinates of the respective devices in the plane rectangular coordinate system. It is also possible to establish, a polar coordinate system or a planar rectangular coordinate system based on the first device, and use the location of the first device as the origin to determine coordinates corresponding to other devices to determine the location.

In some embodiments, there is only one first device in all target spaces, or one first device can be provided in each of multiple sub-regions of the target space, or multiple first devices can be provided in some sub-regions. Since the first device has the function of positioning or interaction, more first devices can better locate and can better position the second device. In addition, the barrier of the wall will affect some positioning modes. A first device may be provided in each sub-region, and through the first device in the sub-region, the second device in the same sub-region can be positioned, thereby making the positioning more accurate and reliable.

In step S15, the semantic map is generated, wherein the semantic map includes at least the target space, as well as the location of the first devices and the location of the second devices in the target space.

In some possible embodiments, it can be understood that after determining the location of the first device and the location of the second device in the target space, semantic label data including the location of the first device and the location of the second device is marked in this semantic map.

The semantic map generated by the method of the embodiments of the present disclosure may include the target space, that is, it includes information such as distribution of sub-regions of the target space and the size of the region. Meanwhile, the semantic map also contains all the locations of the first devices and the second devices. As shown in FIG. 6, an exemplary display mode of a semantic map is shown, which may include the range and area of the target space 100, and also includes the location of the device, including the first device 211, the second devices 221, 222, 223, 224, and 225, and can also display identifiers of the respective sub-regions 110, 120, 130, 140, 150 (not shown in the figure). In this way, the devices in the target space may be displayed intuitively, which is convenient for user management. The location relationship between the devices is determined, such that they can be manipulated based on location. In addition, the semantic map may also include information such as the type of each device. The semantic map obtained by the method for generating a semantic map can give more semantic information to the map and related devices, so as to facilitate control logical settings.

In some embodiments of the present disclosure, step S11 may include: receiving an initial map sent by a third device, where the initial map is generated by the third device; or, acquiring the initial map through image acquisition.

In some embodiments of the present disclosure, the third device may be a sweeping robot or other movable devices, and the target space is detected through the radar or photographing device of the third device. For example, when a sweeping robot performs a cleaning task, as shown in FIG. 4, it will form a map with a trajectory, and the map with a trajectory can reflect the features of the boundaries of each room. The third device may also be a terminal device such as a computer, an electronic drawing board, etc., and the initial map is generated through some drawing software. In some possible implementation modes, the initial map of the target space may be constructed through the SLAM (Simultaneous Localization And Mapping) system.

In some other embodiments of the present disclosure, the initial map may also be acquired through image acquisition. For example, a house plan of the target space can be acquired through an image acquiring module. The house plan may be a picture displayed in a house book or building blueprint, or a picture or video of the target space may be taken through a device's camera, and an initial map may be further generated. The initial map can be easily obtained through any of the above methods, providing preliminary spatial features for generating the semantic map.

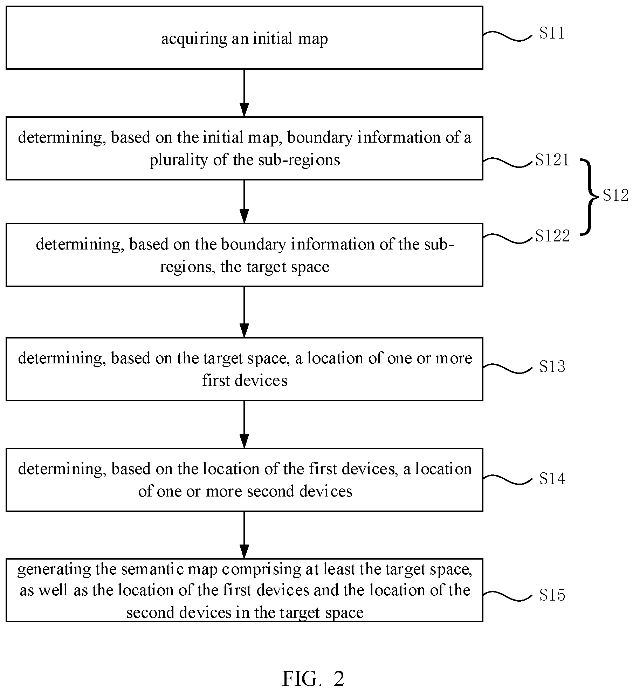

In some embodiments of the present disclosure, as shown in FIG. 2, step S12 may include: step S121, determining the boundary information of multiple sub-regions based on the initial map; and step S122, determining the target space based on the boundary information of the sub-regions. In this embodiment, the boundary information of multiple sub-regions can be determined through the initial map, for example, the boundary location of each sub-region, such as a wall, and the connected locations of each sub-region, such as doors, windows, etc. By determining the boundary information of the each sub-region, the complete layout of the target space can be obtained.

In some embodiments of the present disclosure, as shown in FIG. 2, step S12 may include: determining identifiers of the sub-regions, wherein the identifiers are associated with the first device and the second device located in the corresponding sub-regions of the identifiers. In this embodiment, identifiers of some or all of the sub-regions may be determined. The identifiers may be automatically generated, for example, an identifier of a sub-region is generated according to scene of the target space. The identifiers may also be entered manually by the user. The identifiers may be the names of the respective sub-regions, such as living room, bedroom, office, etc. In the semantic map, each device may be associated with the identifier corresponding to the sub-region where it is located, that is, semantics of the identifier of the associated sub-region is assigned to each device. For example, the speaker in the living room and the speaker in the bedroom are respectively assigned semantic information of different regions. This makes it easier to manage devices.

In some embodiments of the present disclosure, in step S13, the process of determining the location of one or more first devices based on the target space may be determined by the user in the image of the determined target space, for example, clicking the corresponding location to determine the location of the first device.

In some other embodiments of the present disclosure, determining the location of one or more first devices based on the target space in step S13 may only determine the sub-region where the first device is located in the target space. In this embodiment, only the region where the first device is located can be determined, such as the living room, the bedroom, etc. After the sub-region of the first device is determined, the location of the second device may be determined based on the first device. In addition, in this embodiment, the determined location of the second device refers to the location relationship between the second device and the first device, that is, the distance and angle between the second device and the first device. For example, the location of the first device may be used as a pole to establish a polar coordinate system, then the second device can determine location relationship between the second device and the first device by means of polar diameter (the corresponding distance) and polar angle (the corresponding angle) of the polar coordinates. In this embodiment, it is not necessary to determine the precise locations of the first device and the second device in the target space. In this embodiment, after the semantics of location relationship between the second device and the first device are determined, the user can determine the second device according to the user's current location by pointing in the direction of the second device, that is, the second device can be determined according to the pointing direction of the user. For example, the user points to the second device that needs to be controlled through a mobile terminal such as a mobile phone or a watch. The mobile terminal can determine the relative location with respect to the first device, and the mobile terminal can determine a pointing direction through a pointing action (such as an action of the mobile terminal detected through an acceleration sensor, a gyroscope, etc.). Based on the relative location and the pointing direction determined by the mobile terminal, the second device in the pointing direction can be determined, and corresponding manipulation can be performed. It is convenient for the user to select and control the second device. Through this embodiment, there is no need to determine the precise location of the first device, only the sub-region where it is located, which reduces the amount calculation and improves user experience.

The mobile terminal in some embodiments of the present disclosure may include a UWB module, and may perform positioning with the first device having the UWB module to determine the relative location of the two. It may also include any one or more of the following modules: a millimeter wave module, an ultrasonic module, a radar module, a Wi-Fi module, a Bluetooth module, a laser module, an infrared module. The relative location with respect to the first device or the location in the target space is determined through the corresponding module.

In other embodiments of the present disclosure, step S13 may include: receiving location information sent by the first device, and determining the location of the first device based on the location information; wherein the location information is obtained by measuring and calculating through the first devices. In this embodiment, the first device may use its own UWB module, radar module, ultrasonic module, etc., to obtain the location information through its own measurement and calculation, such as detecting the distance between itself and surrounding walls by radar waves. The location of the first device can be determined by reflecting the calculated location information in the target space. The target space may be sent to the first device, and the first device may calculate its own location according to the determined location of the target space, such as a wall. It is also possible to directly perform measurement and calculation through the first device, receive the location information, and then determine the location of the first device in the sub-region based on boundary information of the sub-region in the target space, etc. In this embodiment, the location is determined by the first device itself, which can be more convenient, save user operations, improve user experience, obtain a more accurate location, and avoid manual input errors.

In some embodiments of the present disclosure, step S14 may include: setting a mobile terminal at a location of a second device to be determined currently; and determining the current location of the mobile terminal based on the location of the first device, wherein the mobile terminal can determine a relative location with respect to the first devices through data interaction with the first devices; and taking the current location of the mobile terminal as the current location of the second device to be determined currently. In this embodiment, the mobile terminal may be a mobile phone, a tablet computer, or a wearable device such as a smart watch. The mobile terminal may perform data interaction with the first device, for example, determining mutual location relationship through UWB, or perform data interaction with the first device through Bluetooth communication to perform positioning. In this embodiment, the mobile terminal's ability to determine the relative location relationship with respect to the first device may be used to move the mobile terminal to the location of the second device, and then the location determined by the mobile terminal with respect to the first device is used as the location of the second device. In this way, the location of each second device can be easily determined, and accurate location determination for the second device can be achieved without any data interaction function. In some cases, it is also possible to check the boundary location of the sub-region in the target space in this way, or determine the location of some objects in the sub-region that need to be reflected in the semantic map.

In some embodiments of the present disclosure, step S14 may also include: determining the location of a mobile terminal based on the location of the first device; and determining the location of the second device to be currently determined based on the location relationship between the second device to be currently determined and the first device, and/or the location relationship between the second device to be currently determined and the mobile terminal, respectively, wherein the location relationship includes distance and/or angle. The mobile terminal is similar to that described in the foregoing embodiments, and may be a mobile phone, a tablet computer, a smart watch, etc., and can perform data interaction with the first device. In this embodiment, the mobile terminal does not need to be placed at the location of the second device whose location is to be determined, instead, the location of the second device may be determined through the location relationship between the second device and the first device, through the location relationship between the second device and the mobile terminal, or based concurrently on both the location relationship between the second device and the first device and the location relationship between the second device and the mobile terminal. In some embodiments of the present disclosure, the angle may refer to direction information between the two devices, which may be reflected by a straight line in the coordinate system of the target space, or reflected by an angle determined between the two devices relative to the pole based on the polar coordinate system.

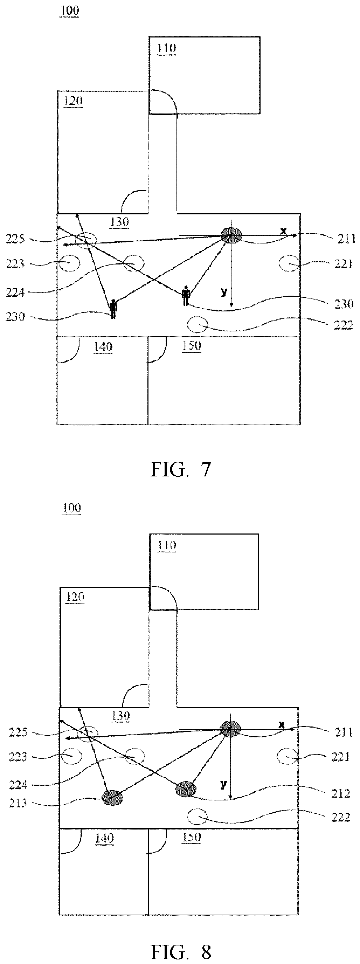

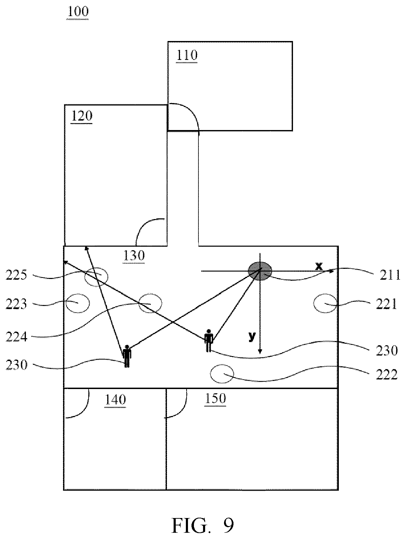

For example, as shown in FIG. 7, the distance between the second device 225 and the first device 211 as well as the distance between the second device 225 and the mobile terminal 230 may be acquired through a data interacting module such as Bluetooth on the second device 225 whose location is to be determined, or may be measured by, for example, a distance sensor. Since the locations of the first device 211 and the mobile terminal 230 have been determined, the location of the second device 225 in the target space 100 can be determined. Alternatively, the angle between the second device 225 and the first device 211 and the angle between the second device 225 and the mobile terminal 230 may also be determined separately, such that the location of the second device 225 can also be determined. For another example, as shown in FIG. 9, after the distance or angle with respect to the mobile terminal 230 is determined for the first time, the location of the mobile terminal 230 may be changed, and the distance or angle with respect to the mobile terminal 230 may be determined for the second time, and locations of the mobile terminal 230 for the two times can be determined based on the first device 211, and the location of the second device 225 whose location is to be determined can also be obtained based on the location information with respect to the mobile terminal 230 for two times.

In some embodiments of the present disclosure, there are multiple first devices; step S14 may also include: determining the location of the second device to be determined currently based on a distance and/or angle between the second device to be currently determined and each of the first devices. In this embodiment, multiple first devices may be set in one target space, or multiple first devices may be set in one sub-region. The location of the second device to be determined currently is determined through multiple first devices whose locations have been determined. As shown in FIG. 8, the way of determining may be that the location of the second device 225 in the target space 100 can be determined through the distance or angle between the multiple first devices 211, 212, 213 and the second device 225. Through the mode in this embodiment, location determination of the second device in the space may be performed by multiple first devices, which can be completed automatically and efficiently, reduce user operations, and improve user experience.

In some embodiments of the present disclosure, step S14 may further include: determining an initial location of the second devices based on the target space,; and determining the location of the second devices based on the location of the first devices and the initial location of the second devices. In this embodiment, the initial location of the second device may be determined first after the target space is determined, and the initial location of the second device may be roughly determined by the user clicking on the displayed target space image. The initial location may be a point or a coarse-grained location range. In the subsequent process of determining the location of the second device, determination may be performed around the initial location or within the location range, which can reduce the amount of calculation for determining the location of the second device and save calculation costs.

In some embodiments of the present disclosure, as shown in FIG. 3, the method for generating a semantic map further includes: step S16, determining, based on the location of the first devices and the location of the second devices in the target space, and/or based on a user instruction, association relationship between any multiple devices in the first devices and the second devices; and step S17, adding the association relationship to the semantic map. In this embodiment, it is possible to further determine association relationship between devices to assign more semantic information to devices, and to provide more device application modes. For example, two independent speakers are used as left and right channels to achieve stereo effects. Usually, the user needs to turn on the two speaker devices separately to realize the aforesaid stereo playback function. However, in some embodiments of the present disclosure, the user can set mutual association relationship between the two speakers based on types and locations of devices, such as turning on and turning off at the same time. Therefore, the two speakers set as the left and right channels may be conveniently turned on and off. In another example, it may also be determined that the two speakers are associated based on the location of the two speakers in the target space or the location relationship with other devices, and then the association relationship may be automatically determined or the user is reminded to confirm. For example, if two speakers are located on two sides of the sub-region of the living room, or two speakers are located on two sides of the TV, it may be determined that the two speakers can be associated. Through this embodiment, it is convenient for the user to confirm association relationship between devices in the semantic map, such that the semantic map function is more abundant and the user experience is better.

Based on the same inventive concept, the present disclosure further provides an apparatus 300 for generating a semantic map. The apparatus 300 for generating a semantic map may include one or more of the following modules: a millimeter wave module, an ultrasonic module, a radar module, a Wi-Fi module, a Bluetooth module, a laser module, an infrared module.

It may be understood that, in order to achieve the above functions, the apparatus 300 for generating a semantic map provided by the embodiments of the present disclosure includes a hardware structure and/or a software module corresponding to each function. With reference to the units and algorithm steps of each example disclosed in some embodiments of the present disclosure, the embodiments of the present disclosure may be implemented in the form of hardware or a combination of hardware and computer software. Whether a certain function is performed by hardware or computer software-driven hardware depends on the specific application and design constraints of the technical solutions. Those skilled in the art may use different methods to implement the described functions for each specific application, but such implementation should not be considered to go beyond the scope of the technical solutions of the embodiments of the present disclosure.

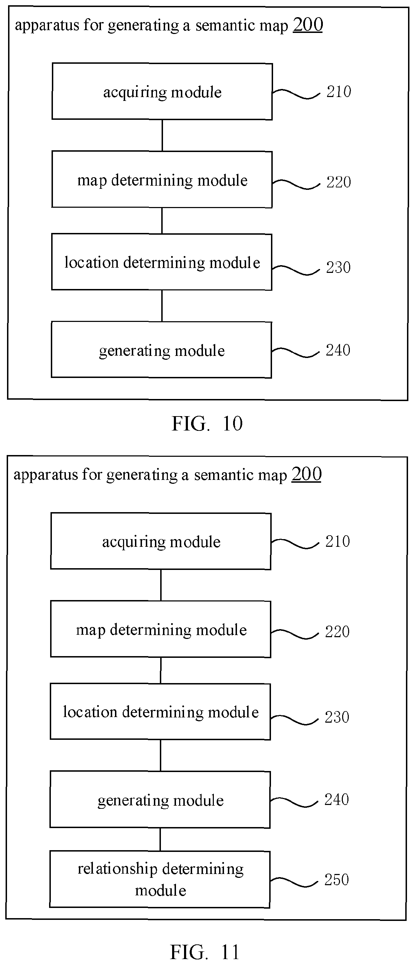

FIG. 10 is a block diagram showing a semantic map generating apparatus 300 according to some embodiments.

As shown in FIG. 10, in some embodiments of the present disclosure, the apparatus 300 for generating a semantic map includes: an acquiring module 310 configured to acquire an initial map; a map determining module 320 configured to determine, based on the initial map, a target space, wherein the target space includes one or more sub-regions; a location determining module 330 configured to determine, based on the target space, locations of one or more first devices, and to determine, based on the locations of the first devices, locations of one or more second devices; a generating module 340 configured to generate the semantic map, wherein the semantic map includes at least the target space, as well as the locations of the first devices and the locations of the second devices in the target space.

In an embodiment, the acquiring module 310 is further configured to: receive an initial map sent by a third device, wherein the initial map is generated by the third device; or, the initial map is acquired by way of image acquisition.

In an embodiment, the map determining module 320 is further configured to: determine, based on the initial map, boundary information of the multiple sub-regions; and determine, based on the boundary information of the sub-regions, the target space.

In an embodiment, the map determining module 320 is further configured to: determine identifiers of the sub-regions, wherein the identifiers are associated with the first devices and the second devices located in the sub-regions corresponding to the identifiers.

In an embodiment, the location determining module 330 is further configured to: receive location information sent by the first devices, and determine the locations of the first devices based on the location information; wherein the location information is obtained by measuring and calculating through the first devices.

In an embodiment, the location determining module 330 is further configured to: determine, based on the target space, an initial location of the second devices; and determine, based on the location of the first devices and the initial location of the second devices, the location of the second devices.

In an embodiment, the location determining module 330 is further configured to: set a mobile terminal at a location of a second device to be currently determined; determine, based on the location of the first devices, a current location of the mobile terminal, wherein the mobile terminal can determine a relative location with respect to the first devices through data interaction with the first devices; and take the current location of the mobile terminal as the current location of the second device to be currently determined.

In an embodiment, the location determining module 330 is further configured to: determine, based on the location of the first devices, a location of a mobile terminal; and determine, based on location relationship between the second device to be currently determined and the first device and/or the mobile terminal respectively, a location of the second device to be currently determined, wherein the location relationship includes distance and/or angle.

In an embodiment, the first devices are multiple; the location determining module 330 is further configured to: determine, based on a distance and/or angle between the second device to be currently determined and each of the first devices respectively, the location of the second device to be currently determined.

In an embodiment, as shown in FIG. 11, the apparatus 300 for generating a semantic map further includes: a relationship determining module 350 configured to determine, based on the location of the first device and the location of the second device in the target space, and/or based on a user instruction, the association relationship between any multiple devices in the first device and the second device; and the generating modules is specifically configured to: add the association relationship to the semantic map.

With respect to the apparatus 300 for generating a semantic map in the above embodiments, the specific manners for performing operations for individual modules therein have been described in detail in some embodiments regarding the methods, which will not be elaborated herein.

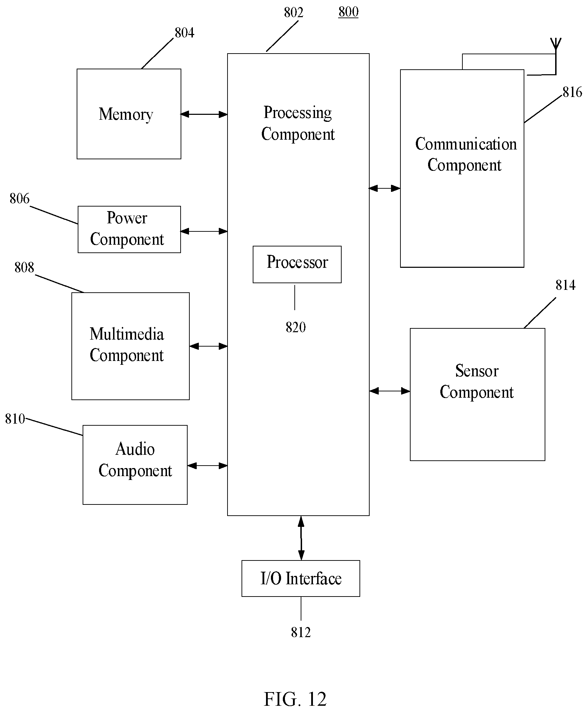

FIG. 12 is a block diagram of an apparatus 800 for generating a semantic map shown according to some embodiments. For example, the device 800 for generating a semantic map may be a mobile phone, a computer, a digital broadcast terminal, a messaging device, a gaming console, a tablet, a medical device, exercise equipment, a personal digital assistant, etc.

Referring to FIG. 12, the device 800 for generating a semantic map can include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the device 800 for generating a semantic map, such as the operations associated with display, telephone calls, data communications, camera operations, and recording operations. The processing component 802 can include one or more processors 820 to execute instructions to perform all or part of the steps in the above described methods. Moreover, the processing component 802 can include one or more modules which facilitate the interaction between the processing component 802 and other components. For instance, the processing component 802 can include a multimedia module to facilitate the interaction between the multimedia component 808 and the processing component 802.

The memory 804 is configured to store various types of data to support the operation of the device 800 for generating a semantic map. Examples of such data include instructions for any applications or methods operated on the device 800 for generating a semantic map, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the device 800 for generating a semantic map. The power component 806 can include a power management system, one or more power sources, and any other components associated with the generation, management, and distribution of power in the device 800 for generating a semantic map.

The multimedia component 808 includes a screen providing an output interface between the device 800 for generating a semantic map and the user. In some embodiments, the screen can include a liquid crystal display (LCD) and a touch panel (TP). In some implementations, an organic light-emitting diode (OLED) display can be employed.

If the screen includes the touch panel, the screen may be implemented as a touch screen to receive input signals from the user. The touch panel includes one or more touch sensors to sense touches, swipes, and gestures on the touch panel. The touch sensors can not only sense a boundary of a touch or swipe action, but also sense a period of time and a pressure associated with the touch or swipe action. In some embodiments, the multimedia component 808 includes a front camera and/or a rear camera. The front camera and the rear camera can receive an external multimedia datum while the device 800 for generating a semantic map is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the device 800 for generating a semantic map is in an operation mode, such as a call mode, a recording mode, or a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, etc. The buttons can include, but are not limited to, a home button, a volume button, a starting button, and a locking button.

The sensor component 814 includes one or more sensors to provide status assessments of various aspects of the device 800 for generating a semantic map. For instance, the sensor component 814 can detect an open/closed status of the device 800 for generating a semantic map, relative positioning of components, e.g., the display and the keypad, of the device 800, a change in location of the device 800 for generating a semantic map or a component of the device 800 for generating a semantic map, a presence or absence of user contact with the device 800 for generating a semantic map, an orientation or an acceleration/deceleration of the device 800 for generating a semantic map, and a change in temperature of the device 800 for generating a semantic map. The sensor component 814 can include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the device 800 for generating a semantic map and other devices. The device 800 for generating a semantic map can access a wireless network based on a communication standard, such as Wi-Fi, 2G, 3G, 4G, 5G, etc., and a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, or other technologies.

In exemplary embodiments, the device 800 for generating a semantic map may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In some embodiments, there is also provided a non-transitory computer readable storage medium including instructions, such as included in the memory 804, executable by the processor 820 in the device 800 for generating a semantic map, for performing the above-described methods. For example, the non-transitory computer-readable storage medium may be a ROM, a RAM, a CD-ROM, a magnetic tape, a floppy disc, an optical data storage device, etc.

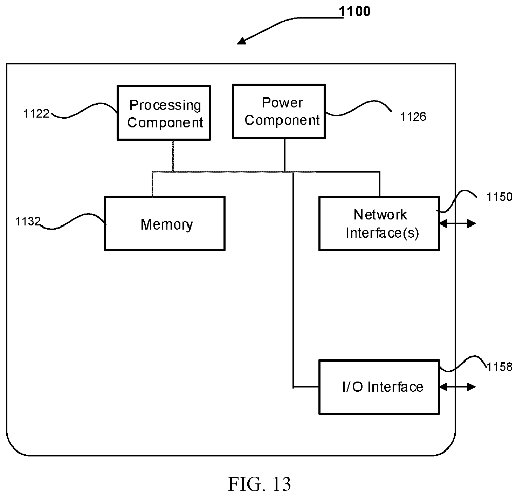

FIG. 13 is a block diagram of another apparatus for generating a semantic map according to some embodiments. For example, the device 1100 for generating a semantic map can be provided as a server. Referring to FIG. 16, the device 1100 for generating a semantic map includes a processing component 1122 which further includes one or more processors, and a memory resource represented by a memory 1132 for storing instructions that can be executed by the processing component 1122, such as applications program. The application program stored in the memory 1132 may include one or more modules each corresponding to a set of instructions. In addition, the processing component 1122 is configured to execute instructions to perform the above-described method.

The device 1100 for generating a semantic map may further include a power supply component 1126 configured to perform power management of the device 1100 for generating a semantic map, a wired or wireless network interface 1150 configured to connect the device 1100 for generating a semantic map to the network, and an input and output (I/O) interface 1158. The device 1100 for generating a semantic map can operate based on an operating system stored in the memory 1132, such as Windows Server^{™}, Mac OS X^{™}, Unix^{™}, Linux^{™}, FreeBSD^{™}, etc.

Various embodiments of the present disclosure can have one or more of the following advantages.

By generating a semantic map, all devices in the target space can be conveniently and accurately positioned, locations of the devices in the target space and their mutual location relationship can be determined, such that the devices can be controlled according to their orientation and location. In addition, generation of the semantic map allows the user to intuitively learn the locations and types of all devices in the target space, also easily manage and edit an operating mode of any device, and set logical association between multiple devices.

In the description of the present disclosure, the terms "one embodiment," "some embodiments," "example," "specific example," or "some examples," and the like can indicate a specific feature described in connection with the embodiment or example, a structure, a material or feature included in at least one embodiment or example. In some embodiments of the present disclosure, the schematic representation of the above terms is not necessarily directed to the same embodiment or example.

Moreover, the particular features, structures, materials, or characteristics described can be combined in a suitable manner in any one or more embodiments or examples. In addition, various embodiments or examples described in the specification, as well as features of various embodiments or examples, can be combined and reorganized.

It should be understood that "a plurality" or "multiple" as referred to herein means two or more. "And/or," describing the association relationship of the associated objects, indicates that there may be three relationships, for example, A and/or B may indicate that there are three cases where A exists separately, A and B exist at the same time, and B exists separately. The character "/" generally indicates that the contextual objects are in an "or" relationship.

Moreover, the terms "first" and "second" are used for descriptive purposes only and are not to be construed as indicating or implying a relative importance or implicitly indicating the number of technical features indicated. Thus, elements referred to as "first" and "second" may include one or more of the features either explicitly or implicitly. In the description of the present disclosure, "a plurality" indicates two or more unless specifically defined otherwise.

Some other embodiments of the present disclosure can be available to those skilled in the art upon consideration of the specification and practice of the various embodiments disclosed herein. The present application is intended to cover any variations, uses, or adaptations of the present disclosure following general principles of the present disclosure and include the common general knowledge or conventional technical means in the art without departing from the present disclosure. The specification and examples can be shown as illustrative only, and the true scope the disclosure is indicated by the following claims.

## Claims

1. A method for generating a semantic map, comprising:
acquiring (S11) an initial map;
determining (S12), based on the initial map, a target space comprising one or more sub-regions;
determining (S13), based on the target space, a location of one or more first devices;
determining (S14), based on the location of the first devices, a location of one or more second devices; and
generating (S15) the semantic map comprising at least the target space, the location of the first devices and the location of the second devices in the target space.

2. The method for generating a semantic map according to claim 1, wherein said acquiring (S11) an initial map comprises at least one of:
receiving an initial map sent by a third device, wherein the initial map is generated by the third device; and
acquiring the initial map by way of image acquisition.

3. The method for generating a semantic map according to claim 1 or 2, wherein said determining (S12), based on the initial map, a target space comprises:
determining (S121), based on the initial map, boundary information of a plurality of the sub-regions; and
determining (S122), based on the boundary information of the sub-regions, the target space.

4. The method for generating a semantic map according to claim 3, wherein said determining (S12), based on the initial map, a target space further comprises:
determining identifiers of the sub-regions, wherein the identifiers are associated with the first devices and the second devices located in the sub-regions corresponding to the identifiers.

5. The method for generating a semantic map according to any of claims 1-4, wherein said determining (S13), based on the target space, a location of one or more first devices comprises:
receiving location information sent by the first devices, and determining, based on the location information, the location of the first devices;
wherein the location information is obtained by measuring and calculating through the first devices.

6. The method for generating a semantic map according to any of claims 1-5, wherein said determining (S14), based on the location of the first devices, a location of the second devices comprises:
determining, based on the target space, an initial location of the second devices; and
determining, based on the location of the first devices and the initial location of the second devices, the location of the second devices.

7. The method for generating a semantic map according to any of claims 1-6, wherein said determining (S14), based on the location of the first devices, a location of the second devices further comprises:
setting a mobile terminal at a location of a second device to be currently determined;
determining, based on the location of the first devices, a current location of the mobile terminal, wherein the mobile terminal can determine a relative location with respect to the first devices through data interaction with the first devices; and
taking the current location of the mobile terminal as the current location of the second device to be currently determined.

8. The method for generating a semantic map according to any of claims 1-7, wherein said determining (S14), based on the location of the first devices, the location of the second devices further comprises:
determining, based on the location of the first devices, a location of a mobile terminal; and
determining, based on location relationship between the second device to be currently determined and the first device and/or the mobile terminal respectively, a location of the second device to be currently determined, wherein the location relationship includes distance and/or angle.

9. The method for generating a semantic map according to any of claims 1-8, wherein the first devices are multiple; and said determining (S14), based on the location of the first devices, the location of the second devices further comprises:
determining, based on a distance and/or angle between the second device to be currently determined and each of the first devices respectively, the location of the second device to be currently determined.

10. The method for generating a semantic map according to any of claims 1-9, further comprising:
determining (S16), based on the location of the first devices and the location of the second devices in the target space, and/or based on a user instruction, association relationship between any multiple devices in the first devices and the second devices; and
adding (S17) the association relationship to the semantic map.

11. An apparatus (200) for generating a semantic map, comprising:
an acquiring module (210) configured to acquire an initial map;
a map determining module (220) configured to determine, based on the initial map, a target space, wherein the target space includes one or more sub-regions;
a location determining module (230) configured to determine, based on the target space, a location of one or more first devices, and to determine, based on the location of the first devices, a location of one or more second devices; and
a generating module (240) configured to generate the semantic map, wherein the semantic map includes at least the target space, the location of the first devices and the location of the second devices in the target space.

12. The apparatus (200) for generating a semantic map according to claim 11, wherein the acquiring module (210) is further configured to perform at least one of: receiving an initial map sent by a third device, wherein the initial map is generated by the third device; and acquiring the initial map by way of image acquisition.

13. The apparatus (200) for generating a semantic map according to claim 11 or 12, wherein the map determining module (220) is further configured to:
determine, based on the initial map, boundary information of the plurality of sub-regions; and
determine, based on the boundary information of the sub-regions, the target space.

14. The apparatus (200) for generating a semantic map according to any one of claims 11 to 13, further comprises:
a relationship determining module (250) configured to determine, based on the location of the first device and the location of the second device in the target space, and/or based on a user instruction, the association relationship between any multiple devices in the first device and the second device; and
the generating modules (240) is specifically configured to: add the association relationship to the semantic map.

15. Anon-transitory computer-readable storage medium having stored therein instructions that when executed by a processor of a mobile terminal, enables the mobile terminal to implement a method for generating a semantic map according to any of claims 1-10.
